# EUROPÄISCHE PATENTSCHRIFT

(11) **EP 2 314 489 B1**
(45) Veröffentlichungstag und Bekanntmachung des Hinweises auf die Patenterteilung: **19.08.2015**
(21) Anmeldenummer: 10010719.2
(22) Anmeldetag: 27.09.2010
(51) Int. Cl.: B60W 50/08, B60W 40/08, B60W 30/12, B60W 30/16

(54) **Verfahren zur Steuerung des Betriebs eines vollautomatischen, zur unabhängigen Fahrzeugführung ausgebildeten Fahrerassistenzsystems eines Kraftfahrzeugs und Kraftfahrzeug**
Method for controlling the operation of a fully automatic driver assistance system of a motor vehicle for independent vehicle guidance and motor vehicle
Procédé de commande du fonctionnement d'un système d'assistance au conducteur totalement automatique développé pour guider un véhicule de manière indépendante destiné à un véhicule automobile et véhicule automobile

(30) Priorität: 22.10.2009 DE 102009050404
(43) Veröffentlichungstag der Anmeldung: 27.04.2011
(73) Patentinhaber: Audi AG, 85045 Ingolstadt (DE)
(72) Erfinder: Hörwick, Markus, 80939 München (DE); Siedersberger, Karl-Heinz, Dr., 85049 Ingolstadt (DE); Schickram, Stephan, 80804 München (DE)
(74) Vertreter: Thielmann, Frank

(56) Entgegenhaltungen:
- DE-A1- 10 126 224
- DE-A1- 10 350 276
- DE-A1-102007 003 740
- US-A1- 2005 030 184

## Beschreibung

Die Erfindung betrifft ein Verfahren zur Steuerung des Betriebs eines vollautomatischen, zur unabhängigen Fahrzeugführung ausgebildeten Fahrerassistenzsystems eines Kraftfahrzeugs, bei welchem bei Eintritt wenigstens einer Übernahmebedingung eine Fahrerübernahmeaufforderung ausgegeben wird, welche bei Fahrübernahme durch den Fahrer, insbesondere durch Betätigung des Lenkrads und/oder der Pedalerie, zum Deaktivieren des Fahrerassistenzsystems führt, sowie ein Kraftfahrzeug mit einem solchen Fahrerassistenzsystem.

Im Stand der Technik sind viele Fahrerassistenzsysteme bekannt, bei denen die Fahrzeugführung, also die Längs- bzw. Querregelung, teils durch den Fahrer, teils durch das Fahrerassistenzsystem erfolgt. Beispiele für solche Fahrerassistenzsysteme sind Längsführungssysteme, beispielsweise ACC (automatic cruise control) und Stop-and-Go-Systeme, Querführungssysteme, wie ein Spurmittenführungssystem, oder auch Spurhalteassistenten. Die Verantwortung für die vom Kraftfahrzeug durchgeführten Aktionen und Fahrmanöver liegt bei solchen Fahrerassistenzsystemen weiter beim Fahrer, der das Fahrerassistenzsystem und dessen Handlungen laufend überwacht.

Aktuell richtet sich die Entwicklung von Fahrerassistenzsystemen hauptsächlich auf sogenannte vollautomatische Fahrerassistenzsysteme, die die Fahrzeugführung (innerhalb definierter Grenzen) vollständig übernehmen sollen. Ein entsprechendes Beispiel ist der sogenannte Stauassistent. Diese Systeme haben beispielsweise zum Ziel, dem Fahrer im Stau, also bei Geschwindigkeiten kleiner als 60 km/h, sowohl die Längsführung bezüglich des Vorderfahrzeugs als auch die Querführung innerhalb der eigenen Spur abzunehmen. Ein anderes Beispiel sind automatische Einparksysteme oder dergleichen, letztlich werden jedoch solche vollautomatischen Fahrerassistenzsysteme für verschiedene, auch bei höheren Geschwindigkeiten anzuwendende Fälle entwickelt.

Da vollautomatische Fahrerassistenzsysteme dem Fahrer die komplette Fahraufgabe (Längs- und Querführung) über einen längeren Zeitraum vollständig abnehmen, besteht die Möglichkeit, dass sich der Fahrer nach einiger Zeit von der Fahraufgabe zurückziehen und Nebenbeschäftigungen nachgehen wird. Dies hat zur Folge, dass er im Falle einer sogenannten Fahrerübernahmeaufforderung, wenn also bestimmte Systemgrenzen erreicht sind und der Fahrer selbst wieder die Kontrolle über das Kraftfahrzeug erhalten soll, nicht mehr schnell genug in adäquater Weise reagieren kann, was das Unfallrisiko erhöht. Auf diese Weise würde - anders als bei teilautomatischen Fahrerassistenzsystemen - der Fahrer, da er nicht fahrübernahmebereit ist, nicht mehr als Rückfallebene fungieren können.

Systemgrenzen eines vollautomatischen Fahrerassistenzsystems sollen im Verständnis der vorliegenden Erfindung nicht nur die Funktionsgrenzen, also der der Spezifikation zu entnehmende Einsatzbereich (bei Stauassistenzsystemen beispielsweise die Grenzgeschwindigkeit oder das Verlassen bestimmter Umgebungen, wie beispielsweise einer Autobahn), sein, sondern auch beispielsweise Systemausfälle/Systemfehler oder externe Einflüsse, wie beispielsweise das Öffnen einer Tür durch den Fahrer. Bei allen derartigen Vorgängen, wenn mithin eine Übernahmebedingung erfüllt ist, wird das vollautomatische Fahrerassistenzsystem den Fahrer auffordern, die Fahrzeugführung, also die Längs- bzw. Querregelung, wieder zu übernehmen. Dies kann beispielsweise dadurch erkannt werden, dass der Fahrer das Lenkrad und/oder die Pedalerie betätigt. Dann kann das vollautomatische Fahrerassistenzsystem wieder deaktiviert werden. Üblicherweise wird dem Fahrer bei einer Fahrerübernahmeaufforderung ein entsprechender optischer und/oder akustischer und/oder haptischer Hinweis gegeben, beispielsweise eine deutliche Anzeige auf einer Kombinationsanzeige, eine Sprachansage, ein Vibrieren des Lenkrads oder dergleichen. Ist der Fahrer in einer solchen Situation, insbesondere einer kritischen Situation wie einem Systemausfall oder dergleichen, nicht in der Lage, schnell die Fahrzeugführung wieder zu übernehmen, können Sicherheitsprobleme, insbesondere Unfälle, auftreten.

US 2005/0030184 zeigt ein System, das sowohl den Abstand zum vorausfahrenden Fahrzeug als auch das Einhalten der Spur sicherstellt. Müdigkeit und/oder Ablenkung des Fahrers werden überwacht.

DE 103 50 276 A1 offenbart eine Vorrichtung zur Ermüdungswarnung in Kraftfahrzeugen mit Abstandswarnsystem. Die dortige Grundidee ist es, den in einem Abstandswarnsystem oder Abstandsregelsystem zugrunde gelegten Warnabstand in Abhängigkeit von dem erfassten Ermüdungszustand zu verändern, wobei auch eine automatische Verzögerung des Fahrzeugs erfolgen kann.

DE 10 2007 003 740 A1 betrifft eine Vorrichtung zum Bremsen eines Fahrzeugs mit einem Bremsregelungssystem, wobei im Fußraum angeordnete Sensoren Notbremssituationen erkennen sollen. Konkret soll eine druckempfindliche Fläche vorgesehen sein.

DE 101 26 224 A1 offenbart ein Verfahren und eine Vorrichtung zur Charakterisierung des Zustandes des Fahrers eines Kraftfahrzeugs, bei denen physiologische Zustandsgrößen in Bezug auf die Gesundheit des Fahrers ermittelt werden und ggf. Fahrerassistenzsysteme aktiviert werden, um das Kraftfahrzeug in einen sicheren Zustand zu überführen.

Der Erfindung liegt daher die Aufgabe zugrunde, ein Steuerungsverfahren für vollautomatische Fahrerassistenzsysteme anzugeben, bei welchem der Fahrer als Rückfallebene erhalten bleibt und somit die Sicherheit erhöht werden kann.

Zur Lösung dieser Aufgabe sind bei einem Verfahren der eingangs genannten Art erfindungsgemäß die Merkmale des Anspruchs 1 vorgesehen.

Erfindungsgemäß wird also vorgeschlagen, durch Auswertung von Sensordaten insbesondere kontinuierlich zu überwachen, ob der Fahrer noch in der Lage ist, hinreichend schnell auf eine Fahrerübernahmeaufforderung zu reagieren, das bedeutet, ob er fahrübernahmebereit ist. Aus den Sensordaten wird mithin wenigstens ein, vorzugsweise mehrere, den auf die Fahrzeugführung bezogenen Zustand des Fahrers beschreibender Zustandswert ermittelt. Ergibt sich aus diesen Zustandswerten, welche entweder unmittelbar oder nach einer weiteren Verarbeitung mit einem oder mehreren Vergleichswerten verglichen werden, dass der Fahrer nicht fahrübernahmebereit ist, mithin auf die Fahrerübernahmeaufforderung nicht schnell genug reagieren kann, wird entweder ein Warnhinweis oder eine Fahrerübernahmeaufforderung ausgegeben. Insbesondere ist es jedoch möglich, einen Warnhinweis und eine Fahrerübernahmeaufforderung zu nutzen, gegebenenfalls zeitlich versetzt, worauf im Folgenden noch näher eingegangen werden wird.

Der oder die Vergleichswerte geben mithin an, bei bzw. ab welchen Werten des oder der Zustandswerte bzw. eines daraus abgeleiteten Werts der Fahrer im Allgemeinen nicht mehr in der Lage sein wird, in der geforderten Zeit auf eine Fahrerübernahmeaufforderung zu reagieren. Insbesondere zeigen die Werte jedoch an, ab wann der Fahrer seine Aufmerksamkeit nicht mehr der Verkehrssituation widmet, also nicht mehr als "im Loop" anzusehen ist. Ein solcher Fall würde bedeuten, der Fahrer die Verantwortung vollständig an das vollautomatische Fahrerassistenzsystem abgibt, an welches jedoch selbstverständlich höhere Sicherheitsanforderungen zu stellen sind als an den Fahrer selbst. Durch das Ausgeben von Warnhinweisen bzw. Fahrerübernahmeaufforderungen und gegebenenfalls ein nachfolgendes Deaktivieren des vollautomatischen Fahrerassistenzsystems wird der Fahrer mithin dazu angehalten, selbstständig die aktuelle Verkehrsituation zu überwachen, um im Falle des Erreichens einer Systemgrenze bzw. einer Fehlfunktion oder dergleichen stets bereit zu sein, die Fahrzeugführung selbst wieder zu übernehmen. Auf diese Weise liegt trotz des vollautomatischen Fahrerassistenzsystems die grundsätzliche Verantwortung für die Fahrzeugführung stets weiterhin beim Fahrer selbst. So wird eine erhöhte Sicherheit erreicht und der Fahrer steht jederzeit als Rückfallebene zur Verfügung.

Die Grundidee des erfindungsgemäßen Verfahrens ist es mithin, den einleitend bereits diskutierten Systemgrenzen, welche innerhalb des Fahrerassistenzsystems beispielsweise als Monitoring-Module. realisiert sein können, eine weitere Systemgrenze hinzuzufügen, die die Fahrübernahmebereitschaft des Fahrers betrifft. Dementsprechend erfordert der Betrieb des vollautomatischen Fahrerassistenzsystems zusätzlich, dass der Fahrer seine Aufmerksamkeit weiter der Verkehrssituation widmet. Ist dies nicht der Fall, wie beispielsweise durch ein Fahrerüberwachungsmodul ständig überwacht werden kann, wird adäquat reagiert, das bedeutet, ein Warnhinweis und/oder eine Fahrerübernahmeaufforderung ausgegeben.

Die Fragestellung, ob der Fahrer fahrübernahmebereit ist, also innerhalb einer beispielsweise vordefinierten Zeitspanne in der Lage ist, die Fahrzeugführung selbst wieder zu übernehmen, kann letztlich in zwei verschiedene Fragestellungen aufgeteilt werden. Zum einen muss gefragt werden, ob der Fahrer die Verkehrssituation weiterhin aufmerksam verfolgt (sogenannte "situation awareness"). Sehr wichtig ist aber auch, ob denn die motorische Reaktionsfähigkeit des Fahrers, beschrieben durch seine aktuelle Stellung, ausreichend ist. Ist nämlich der Fahrer "im Loop", also in der Lage, die Fahrzeugführung schnell zu übernehmen, führt er letztlich drei Schritte aus. Zunächst erkennt er die Verkehrssituation durch deren Wahrnehmung. Basierend auf dieser Wahrnehmung trifft er eine Entscheidung, wie das Fahrzeug weiterzuführen ist. Diese beiden Punkte werden unter "situation awareness" zusammengefasst. Er muss jedoch auch fähig sein, die entsprechenden Handlungen, die aus der Entscheidung resultieren, umzusetzen. Er muss also motorisch reaktionsfähig sein. Es muss die Fähigkeit vorhanden sein, schnell und aktiv ins Fahrgeschehen einzugreifen.

Erfindungsgemäß ist dementsprechend vorgesehen, dass als wenigstens ein Zustandswert ein die motorische Reaktionsfähigkeit des Fahrers durch dessen aktuelle Stellung beschreibender Reaktionsfähigkeitswert, insbesondere ein die Zugänglichkeit des Lenkrads beschreibender Wert und/oder ein die Stellung der Hände des Fahrers beschreibender Wert und/oder ein die Sitzeinstellung beschreibender Wert und/oder ein die Fußstellung des Fahrers beschreibender Wert, verwendet wird. Es wird also anhand von Sensordaten - worauf im Weiteren noch näher eingegangen werden wird - nachverfolgt, ob beispielsweise des Lenkrad frei zugänglich ist oder von Gegenständen, beispielsweise einer Zeitung, bedeckt wird. Andererseits kann auch betrachtet werden, wie die Hände des Fahrers gerade angeordnet sind, ob sie also schnell das Lenkrad greifen können, um auf eine Fahrerübernahmeaufforderung zu reagieren. Auch die Sitzeinstellung, beispielsweise hinsichtlich der Stellung der Rückenlehne oder dergleichen, gibt einen deutlichen Hinweis darauf, ob der Fahrer zum schnellen, aktiven Eingreifen ins Fahrgeschehen bereit ist. Als letztes Beispiel ist die Fußstellung des Fahrers zu nennen. Hierbei stellt sich die Frage, ob seine Füße so positioniert sind, dass er sie. schnell wieder zu den entsprechenden Pedalen der Pedalerie zuordnen kann. Durch Überwachung derartiger Zustandswerte, insbesondere aller genannten Zustandswerte, kann mithin sichergestellt werden, ob aktuell die hinreichende motorische Reaktionsfähigkeit des Fahrers gegeben ist.

Analog kann erfindungsgemäß vorgesehen sein, dass als wenigstens ein Zustandswert ein die aufmerksame Verfolgung der Verkehrssituation durch den Fahrer angebender Situationswahrnehmungswert, insbesondere ein die freie Sicht des Fahrers auf die Straße beschreibender Wert und/oder ein die Blickrichtung des Fahrers beschreibender Wert und/oder ein die Starrheit des Fahrerblickes beschreibender Wert und/oder ein die Müdigkeit und/oder einen Schlaf des Fahrers beschreibender Wert verwendet wird. Auch hier gilt, dass mit besonderem Vorteil alle diese beispielhaft genannten Zustandswerte genutzt werden. Es wird also festgestellt, ob der Fahrer eine freie Sicht auf die Straße hat, ob seine Blickrichtung tatsächlich auf die Straße und die aktuelle Verkehrssituation gerichtet ist, ob er seinen Blick eher starr, d. h., nicht vollständig wahrnehmend, richtet, und/oder ob er müde, unaufmerksam oder gar schlafend im Kraftfahrzeug anwesend ist. Hierdurch kann die "situation awareness" des Fahrers ständig überwacht und überprüft werden.

Um eine besonders einfache und wenig aufwendige Realisierung des erfindungsgemäßen Verfahrens zu ermöglichen, kann vorgesehen sein, dass als wenigstens ein, insbesondere jeder, Zustandswert ein Boolescher Wert oder eine Fuzzylogik-Variable verwendet wird. Im Fall von Booleschen Variablen enthält mithin jeder Zustandswert einen WAHR- oder FALSCH-Eintrag, so dass die Zustandswerte beispielsweise angeben, ob die Stellung der Hände des Fahrers geeignet ist, schnell an das Lenkrad zu gelangen, ob der Fahrer gerade einen starren Blick hat, ob die Sicht frei ist oder dergleichen. Eine bessere Auflösung des aktuellen Fahrerzustands geben Fuzzylogik-Variablen, die üblicherweise zwischen 0 und 1 liegen und auch verschiedene Zwischenzustände anzeigen können, so dass eine differenziertere Beurteilung möglich ist. Die so ausgestalteten Zustandswerte bilden also letztendlich eine Art Fahrermodell, durch dessen Auswertung festgestellt werden kann, ob der Fahrer fahrübernahmebereit ist. Insbesondere kann dabei vorgesehen sein, dass ein mit dem Vergleichswert zu vergleichender Wert durch eine logische Verknüpfung von Zustandswerten oder aufgrund eines Fuzzy-Klassifikators ermittelt wird. So können beispielsweise die als Boolesche Werte vorgesehenen Zustandswerte derart logisch verknüpft werden, dass ein Abweichen eines Werts vom Sollwert bereits einen nicht fahrübernahmebereiten Fahrer anzeigt. Es sind jedoch auch andere Betrachtungsweisen denkbar, insbesondere, wenn auch ein zeitlicher Verlauf berücksichtigt wird. Im Fall der Fuzzy-Logik kann ein Fuzzy-Klassifikator, also ein Klassifikationsverfahren, das letztlich angibt, inwieweit der Fahrer tatsächlich nicht fahrübernahmebereit ist, benutzt werden. Dieses ermöglicht beispielsweise auch die Verknüpfung mehrerer Zustandswerte, die nicht völlig auf eine Nicht-Übernahmebereitschaft des Fahrers hindeuten, aber in der Summe eine solche durchaus aussagen können. Verschiedenste Ausgestaltungen sind hier denkbar, um letztlich zu einem mit dem Vergleichswert zu vergleichenden, abgeleiteten Wert zu gelangen, während es grundsätzlich selbstverständlich genauso gut möglich ist, jeden der Zustandswerte einzeln mit einem Vergleichswert zu vergleichen.

In weiterer Ausgestaltung des erfindungsgemäßen Verfahrens kann vorgesehen sein, dass der zeitliche Verlauf des Zustandswertes, insbesondere in Abhängigkeit von der aktuellen Geschwindigkeit des Kraftfahrzeugs, betrachtet wird. Auf diese Weise können kurzzeitige Abweichungen von den idealen Zustandswerten, die nicht zwangsläufig darauf hindeuten, dass der Fahrer nicht mehr "im Loop" ist, ebenso berücksichtigt werden. Beispielsweise ist es denkbar, dass der Fahrer zum Betätigen eines Schalters, beispielsweise einer Klimaanlage oder dergleichen, die Hände kurzzeitig in eine zum Ergreifen des Lenkrads ungünstige Position bewegt, diese jedoch unmittelbar wieder verlässt. Werden Fuzzy-Logikwerte verwendet, lässt sich dies beispielsweise dadurch abbilden, dass der entsprechende Zustandswert erst langsam beispielsweise von 0 in Richtung der 1 hin anzusteigen beginnt, wobei eben diese Zeitspanne mit eingeht. Doch auch bei der Verwendung von Booleschen Werten kann die Zeit berücksichtigt werden, wenn als zusätzliche Bedingung berücksichtigt wird, dass ein Wert über eine bestimmte Zeitspanne erhalten sein muss oder für einen bestimmten Prozentsatz eines Zeitintervalls vorliegen muss, um auf einen nicht fahrübernahmebereiten Fahrer zu schließen. Dabei kann auch - insbesondere abhängig vom betrachteten Zustandswert - die aktuell gefahrene Geschwindigkeit des Kraftfahrzeugs berücksichtigt werden. Beispielsweise ist es bei einer Geschwindigkeit von etwa 50 km/h häufiger nötig, seinen Blick auf das Verkehrsgeschehen zu richten, als bei einer Geschwindigkeit von 5 km/h.

Mit besonderem Vorteil kann als Sensor ein Lenkradbelegungssensor und/oder ein Sitzeinstellungssensor und/oder ein Fußraumsensor zur Ermittlung der Fußstellung des Fahrers verwendet werden. Diese Sensoren sind insbesondere bezüglich der Ermittlung von auf die motorische Reaktionsfähigkeit des Fahrers bezogenen Zustandswerten, wie sie oben bereits beispielhaft erläutert wurden, nützlich. Vorzugsweise können alle diese Sensoren vorgesehen sein. Dann kann beispielsweise festgestellt werden, ob die aktuelle Sitzeinstellung, gemessen durch den entsprechenden Sensor, den Anforderungen an die motorische Reaktionsfähigkeit genügt bzw. wo genau die Füße im Fußraum stehen, wozu beispielsweise ein bildgebender Sensor verwendet werden kann, jedoch auch andere Möglichkeiten denkbar sind. Ein Lenkradbelegungssensor kann ausgebildet sein, zu detektieren, ob sich die Hände des Fahrers am Lenkrad befinden, zusätzlich sind jedoch auch Lenkradsensoren denkbar, die auch sonstige Gegenstände am oder auf dem Lenkrad feststellen können, so dass schlussgefolgert werden kann, ob das Lenkrad frei ist oder nicht.

Vorzugsweise kann als Sensor auch eine Innenraumkamera verwendet werden, deren Rohdaten durch eine Bildverarbeitung zur Ermittlung wenigstens eines Zustandswertes aufbereitet werden. Solche Innenraumkameras sind grundsätzlich bekannt. Mit ihnen kann beispielsweise anhand der Kopfstellung der Blick des Fahrers überprüft werden, es kann festgestellt werden, ob das Lenkrad frei zugänglich ist, ob die Hände des Fahrers einsatzbereit sind, ob der Fahrer einen starren Blick aufweist, ob er müde ist oder gar schläft, und dergleichen. Dies geschieht im erfindungsgemäßen Verfahren dadurch, dass zunächst durch geeignete Bildverarbeitungsroutinen entsprechende Merkmale des Bildes extrahiert werden können, die dann zur letztendlichen Ermittlung des Zustandswertes eingesetzt werden.

Es sei an dieser Stelle noch angemerkt, dass selbstverständlich auch weitere Daten, beispielsweise Daten anderer Fahrzeugsysteme, berücksichtigt werden können, wenn der wenigstens eine Zustandswert ermittelt wird. Denkbar ist es auch, die Daten mehrerer Sensoren zu fusionieren. Sensoren müssen nicht dem vollautomatischen Fahrerassistenzsystem selbst zugeordnet sein, sondern können unabhängig existieren oder auch anderen Fahrzeugsystemen konkret zugeordnet sein. Insgesamt können die Zustandswerte also auch im Rahmen einer Sensor- bzw. Informationsfusion gewonnen werden.

In weiterer vorteilhafter Ausgestaltung des erfindungsgemäßen Verfahrens kann vorgesehen sein, dass zunächst ein Warnhinweis ausgegeben und weiter der Zustandswert ermittelt und mit dem Vergleichswert verglichen wird, wobei, wenn sich nach einer vorbestimmten Zeitspanne kein einen fahrübernahmebereiten Fahrer anzeigendes Vergleichsergebnis ergibt, eine Fahrerübernahmeaufforderung erfolgt. In dieser Ausgestaltung hat der Fahrer also nach einem entsprechenden Hinweis, dem Warnhinweis, eine gewisse Zeitspanne, insbesondere mehrere Sekunden, Zeit, um wieder in einen fahrübernahmebereiten Zustand zurückzukehren. Tut er dies innerhalb der vorbestimmten Zeitspanne nicht, so erfolgt eine Fahrerübernahmeaufforderung, das bedeutet, der Fahrer muss in einem solchen Fall die Fahrzeugführung wieder übernehmen.

Es sei an dieser Stelle nochmals deutlich hervorgehoben, dass, betrachtet man einen nicht fahrübernahmebereiten Fahrer als eine Systemgrenze, es sich dabei letztlich - im Vergleich zu anderen Systemgrenzen - um einen grundsätzlich noch unkritischen Zustand handelt. Denn noch ist ja das vollautomatische Fahrerassistenzsystem ansonsten voll funktionsfähig, so dass die vorbestimmte Zeitspanne durchaus angesetzt werden kann, um dem Fahrer die Möglichkeit zu geben, wieder in den geforderten Zustand zurückzukehren, ohne dass die Sicherheit dabei über alle Maßen gefährdet wird. Erst nach dieser Zeitspanne erfolgt die tatsächliche Fahrerübernahmeaufforderung.

Weiterhin kann vorgesehen sein, dass, wenn nach einer zweiten vorbestimmten Zeitspanne keine Fahrübernahme des Fahrers erfolgt, das Fahrerassistenzsystem deaktiviert und/oder eine Warnblinkanlage des Kraftfahrzeugs aktiviert wird. Zusätzlich kann selbstverständlich auch ein entsprechender Hinweis ausgegeben werden, beispielsweise eine entsprechende Nachricht in einer Kombinationsanzeige, eine Sprachausgabe oder dergleichen. Über die Warnblinkanlage können andere Verkehrsteilnehmer über die kritische Situation, letztlich also die Weigerung oder Unfähigkeit des Fahrers, die Fahrverantwortung wieder zu übernehmen, informiert werden.

Der Warnhinweis - und selbstverständlich auch andere Hinweise, beispielsweise die Fahrerübernahmeaufforderung - kann auch optisch und/oder akustisch und/oder haptisch ausgegeben werden. Es sind verschiedene Varianten denkbar, den Fahrer darauf hinzuweisen, sich wieder voll und ganz der Verkehrssituation zu widmen und fahrübernahmebereit zu werden. Sprachliche Ansagen sind genauso wie optische Anzeigen oder auch haptische Signale, beispielsweise das Vibrieren des Lenkrads, denkbar. Mit besonderem Vorteil kann der Warnhinweis auch eine Information darüber enthalten, bezüglich welchen Zustandswerts bzw. welcher Zustandswerte geschlussfolgert wurde, dass der Fahrer nicht fahrübernahmebereit ist. Beispielsweise kann ihm mitgeteilt werden, dass seine Fußstellung keine hinreichende motorische Reaktionsfähigkeit ermöglicht oder dergleichen. Verschiedenste Ausgestaltungen sind hier denkbar.

Neben dem erfindungsgemäßen Verfahren betrifft die Erfindung auch ein Kraftfahrzeug, umfassend ein vollautomatisches, zur unabhängigen Fahrzeugführung ausgebildetes Fahrerassistenzsystem mit einem zu dessen Betrieb ausgebildeten Steuergerät, welches zur Durchführung des erfindungsgemäßen Verfahrens ausgebildet ist, sowie wenigstens einen Sensor.

Das Steuergerät ist mithin nicht nur dazu ausgebildet, die anderen Systemgrenzen, also Übernahmebedingungen, zu überwachen und gegebenenfalls eine Fahrerübernahmeaufforderung auszugeben, sondern auch, letztlich als weitere Systemgrenze wenigstens einen den aktuellen auf die Fahrzeugführung bezogenen Zustand des Fahrers beschreibenden Zustandswert unter Berücksichtigung der Daten des wenigstens einen Sensors zu ermitteln. Automatisch wird danach der Zustandswert und/oder ein daraus abgeleiteter Wert mit einem jeweiligen Vergleichswert verglichen, wobei das Steuergerät ferner dazu ausgebildet ist, in Abhängigkeit des Vergleichsergebnisses bei einem nicht fahrübernahmebereiten Fahrer einen Warnhinweis und/oder eine Fahrerübernahmeaufforderung auszugeben. Auch die weiteren Ausführungen des erfindungsgemäßen Verfahrens, wie sie im Vorangegangenen beschrieben wurden, lassen sich analog auf das erfindungsgemäße Kraftfahrzeug anwenden.

Insbesondere kann im Steuergerät eine modulare Struktur vorgesehen sein, wobei diverse Module die Systemgrenzen überwachen. Unter diesen Modulen kann nun auch ein Fahrerüberwachungsmodul vorhanden sein, welches ebenso mit einem globalen Überwachungsmodul kommuniziert. Wird im globalen Überwachungsmodul eine Verletzung einer Systemgrenze festgestellt, wird ein entsprechender Aktionsplan aktiviert, meist die Ausgabe einer Fahrerübernahmeaufforderung. Zusätzlich ist es hier noch möglich, dass ein Aktionsplan auch einen vorangehenden Warnhinweis, wie beschrieben, enthält.

Es sei abschließend noch angemerkt, dass selbstverständlich auch andere Sensoren als die bislang genannten Sensoren verwendet werden können bzw. im Kraftfahrzeug vorgesehen sein können. Denkbar sind beispielsweise auch Sitzbelegungssensoren, falls sich beispielsweise der Fahrer aus dem Fahrersitz in einen anderen Bereich des Kraftfahrzeugs bewegt, oder auch ein Gurtsensor oder dergleichen.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: ein erfindungsgemäßes Kraftfahrzeug,
- Fig. 2: die Wechselwirkung von Modulen im Steuergerät eines vollautomatischen Fahrerassistenzsystems,
- Fig. 3: ein Diagramm zur Erzeugung eines Fahrermodells, und
- Fig. 4: einen möglichen Aktionsplan bei nicht übernahmebereitem Fahrer.

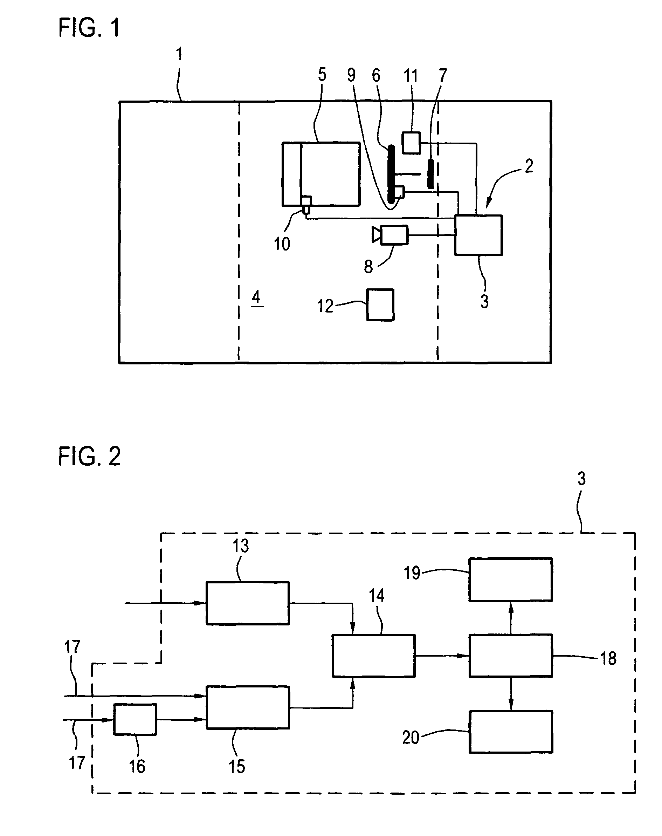

Fig. 1 zeigt ein erfindungsgemäßes Kraftfahrzeug 1. Es umfasst ein vollautomatisches Fahrerassistenzsystem 2 mit einem Steuergerät 3. Das vollautomatische Fahrerassistenzsystem 2 kann beispielsweise ein Stauassistenzsystem oder dergleichen sein. Ersichtlich sind im Kraftfahrzeug, konkret im Innenraum 4 des Kraftfahrzeugs 1, in dem sich unter anderem der Fahrersitz 5, das Lenkrad 6 und die Pedalerie 7 befinden, verschiedene Sensoren vorgesehen. Eine Innenraumkamera 8 nimmt letztlich den gesamten Aktionsbereich des Fahrers auf. Zudem sind ein Lenkradbelegungssensor 9 und ein Sitzbelegungssensor 10 vorgesehen. Weiterhin ist im Fußraum ein Fußraumsensor 11 vorgesehen, der die Stellung der Füße eines Fahrers relativ zur Pedalerie 7 bestimmen kann. Die Daten all dieser Sensoren 8 - 11 werden dem Steuergerät 3 zugänglich gemacht.

Dieses Steuergerät 3 ist nun dazu ausgebildet, das erfindungsgemäße Verfahren auszuführen, d. h. konkret, die Sensordaten dahingehend auszuwerten, dass festgestellt werden kann, ob der Fahrer im Rahmen einer Fahrerübernahmeaufforderung schnell genug dieser nachkommen kann und die Fahrzeugführung wieder selbst übernehmen kann. Dazu werden verschiedene Zustandswerte bestimmt, die den aktuellen auf die Fahrzeugführung bezogenen Zustand des Fahrers beschreiben. Aus diesen Zustandswerten wird ein weiterer Wert abgeleitet, der dann mit einem Vergleichswert verglichen wird. Zeigt das Vergleichsergebnis an, dass der Fahrer nicht fahrübernahmebereit ist, so wird, wie später noch näher dargelegt wird, zeitlich versetzt ein Warnhinweis und danach eine Fahrerübernahmeaufforderung ausgegeben, wofür Ausgabemittel 12, beispielsweise eine Kombinationsanzeige (Kombinationsdisplay) oder dergleichen, vorgesehen sein können. Die Ausgabemittel 12 können selbstverständlich auch akustische und/oder haptische Ausgabemittel 12 umfassen.

Fig. 2 zeigt nun näher, welche Funktionen innerhalb des Steuergeräts 3 anhand verschiedener Module realisiert sind. Dabei werden vorliegend nur die für die vorliegende Erfindung relevanten Module diskutiert.

Grundsätzlich ist zunächst ein Modul 13 zum Systemgrenzen-Monitoring vorgesehen. Es überwacht, ob beispielsweise der Einsatzbereich des vollautomatischen Fahrerassistenzsystems 2 verlassen wird, Fehler im vollautomatischen Fahrerassistenzsystem 2 auftreten, externe Einflüsse das Wirken des Fahrerassistenzsystems 2 unmöglich machen oder dergleichen. Wird eine solche Systemgrenze überschritten, so wird eine spezielle Nachricht an ein globales Überwachungsmodul 14 gesendet. Zusätzlich umfasst das Steuergerät 3 des Kraftfahrzeugs 1 nun jedoch ein Fahrerüberwachungsmodul 15. Diesem Modul werden letztendlich die, im Falle der Innenraumkamera 8 durch ein Bildverarbeitungsmodul 16 aufbereiteten, Sensordaten der Sensoren 8 - 11 übergeben, Pfeile 17. Selbstverständlich können gegebenenfalls auch Daten anderer Sensoren bzw. Fahrzeugsysteme berücksichtigt werden.

Aus all diesen Sensordaten kann nun das Fahrerüberwachungsmodul 15 die bereits erwähnten Zustandswerte ermitteln und daraus schlussfolgern, ob der Fahrer fahrübernahmefähig ist, was als eine weitere Systemgrenze aufgefasst werden kann. Auch ein nicht fahrübernahmebereiter Fahrer wird mithin dem globalen Überwachungsmodul 14 übermittelt.

Anhand der ihm übermittelten Informationen überprüft das globale Überwachungsmodul 14 nun, welcher Aktionsplan angemessen ist. Bei Überschreitung der Systemgrenzen, wie sie durch das Modul 13 geliefert werden, wird dies üblicherweise, da meist eine kritische Situation vorliegt, unmittelbar eine Fahrerübernahmeaufforderung sein, wobei der sie begleitende Hinweis abhängig von der konkreten Situation unterschiedlich ausgebildet sein kann. Als Aktionsplan bei einem nichtübernahmebereiten Fahrer kann beispielsweise vorgesehen sein, zunächst einen Warnhinweis auszugeben und im Fahrerüberwachungsmodul 15 weiter zu überprüfen, ob der Fahrer nicht übernahmebereit ist. Sollte der Fahrer innerhalb einer vorbestimmten Zeitspanne immer noch nicht fahrübernahmebereit sein, kann ebenfalls eine Fahrerübernahmeaufforderung erfolgen.

Den entsprechend ausgewählten Aktionsplan übergibt das globale Überwachungsmodul 14 dann an ein Ausführungsmodul 18, welches dann entsprechend eine Fahrerübernahmeaufforderung 19 oder einen Warnhinweis 20 ausgeben kann.

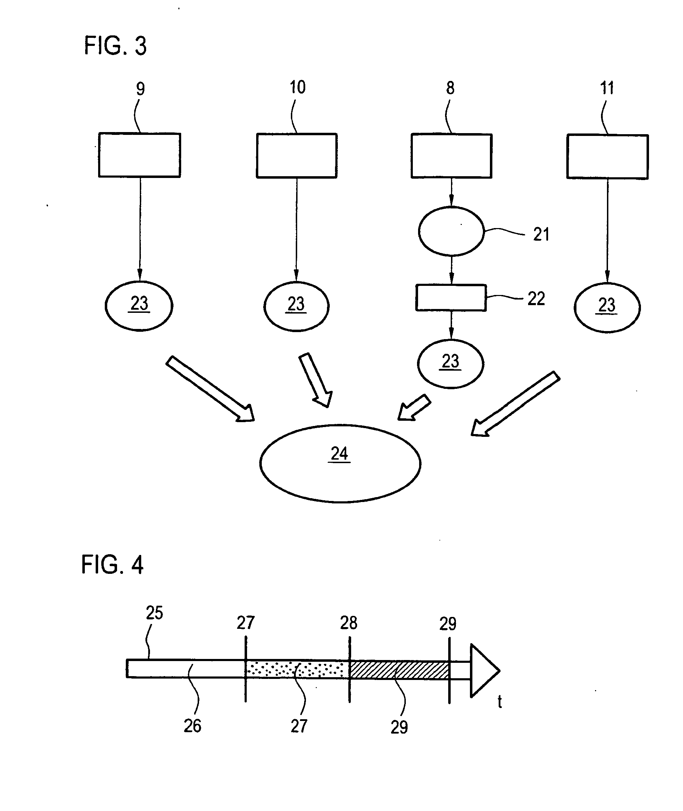

Die Funktion des Fahrerüberwachungsmoduls 15 soll nun mit Hilfe der Fig. 3 nochmals näher erläutert werden. Dort sind oben schematisch die verschiedenen Sensoren dargestellt, nämlich die Innenraumkamera 8, der Lenkradbelegungssensor 9, der Sitzstellungssensor 10 und der Fußraumsensor 11. Die Daten der Innenraumkamera 8, Rohdaten 21, werden durch eine Bildverarbeitung 22 entsprechend aufbereitet. Aus diesen Daten werden dann jeweils verschiedene Zustandswerte 23 hergeleitet, die den Zustand des Fahrers im Hinblick auf die Fahrzeugführung beschreiben und in ihrer Gesamtheit ein Fahrermodell 24 bilden.

Dabei können die Zustandsgrößen 23 entweder die "situation awareness" des Fahrers betreffen, also die aufmerksame Verfolgung der Verkehrssituation durch den Fahrer, oder die motorische Reaktionsfähigkeit, also die Fähigkeit zum schnellen, aktiven Eingreifen ins Fahrgeschehen. Die Zustandswerte 23 sind dabei in diesem Fall jeweils Boolesche Werte, können also den Inhalt WAHR oder FALSCH haben. Auch wenn bevorzugt die Zustandswerte Fuzzylogik-Werte sind, wird doch zur einfacheren Darstellung hier zunächst von Booleschen Werten ausgegangen.

Beispiele für die jeweiligen Zustandswerte 23, die bei den hier dargestellten Ausführungsbeispielen verwendet werden, sind in der folgenden Liste aufgeführt. Dabei ist in der Klammer jeweils angegeben, welchen Wert der Zustandswert annehmen muss, um einen fahrübernahmebereiten Fahrer anzuzeigen.

Situation awareness:
- freie Sicht (WAHR)
- Blick auf Straße (WAHR)
- starrer Blick (FALSCH)
- Müdigkeit (FALSCH)
- Schlaf (FALSCH)

Motorische Reaktionsfähigkeit:
- freies Lenkrad (WAHR)
- einsatzbereite Hände (WAHR)
- geeignete Sitzeinstellung (WAHR)
- rechter Fuß vor Pedal (WAHR)

Die Zustandswerte freie Sicht, Blick auf Straße, starrer Blick, Müdigkeit, Schlaf und einsatzbereite Hände können beispielsweise aus den Daten der Innenraumkamera 8 gefolgert werden, ein freies Lenkrad aus den Daten des Lenkradbelegungssensors 9, die Sitzeinstellung aus den Daten des Sitzeinstellungssensors 10, der Zustandswert "rechter Fuß vor Pedal" aus den Daten des Fußraumsensors 11. Sensordaten selbst oder daraus abgeleitete Werte können dabei beispielsweise mit Grenzwerten oder dergleichen verglichen werden, um schließlich den Booleschen Wert zu erhalten.

Aus den Zustandswerten 23 kann nun durch logische Verknüpfung ein Wert abgeleitet werden, der ebenso als Boolescher Wert angibt, ob der Fahrer fahrübernahmebereit ist oder nicht. Sind im vorliegendem Beispiel alle genannten Zustandswerte 23 den oben in Klammern angegebenen Werten entsprechend bestimmt worden, ist davon auszugehen, dass der Fahrer aufmerksam und motorisch reaktionsfähig ist. Es ergibt sich beispielsweise insgesamt der Wert WAHR, welcher mit dem Sollwert WAHR (also dem Vergleichswert) positiv verglichen wird.

Es sei an dieser Stelle noch angemerkt, dass im vorliegenden Ausführungsbeispiel jedoch auch der zeitliche Verlauf der Zustandswerte 23 in Abhängigkeit der aktuell gefahrenen Geschwindigkeit betrachtet wird. Dies sei am Beispiel des Zustandswerts "Blick auf Straße" näher erläutert. Bei höheren Geschwindigkeiten muss man in kürzeren Abständen auf die Straße blicken als bei niedrigen Geschwindigkeiten. Es wird also abhängig von der Geschwindigkeit letztlich die Blickfrequenz des Fahrers überprüft, indem beispielsweise festgestellt wird, ob er innerhalb eines bestimmten Zeitintervalls seinen Blick auf die Straße richtet und somit die Verkehrssituation wahrnimmt. Eine solche Betrachtung des zeitlichen Verlaufs gibt selbstverständlich auch bei anderen Werten Sinn, beispielsweise, wenn der Fahrer seine einsatzbereiten Hände kurzfristig zum Betätigen eines Schalters in eine nicht einsatzbereite Position bringt oder dergleichen.

Bei der logischen Verknüpfung, die letztendlich zum zu vergleichenden abgeleiteten Wert führt, kann dies entsprechend berücksichtigt werden.

Werden Fuzzylogik-Werte als Zustandswerte 23 verwendet, so kann dieser zeitliche Verlauf bereits in die Zustandswerte 23 selbst mit aufgenommen werden, so dass beispielsweise unmittelbar ein Fuzzy-Klassifikator angewandt werden kann.

Wurde nun erkannt, dass der Fahrer nicht mehr im Loop ist, also nicht übernahmebereit ist, wird, wie bereits diskutiert, ein entsprechender Aktionsplan ausgeführt, der in Fig. 4 näher dargestellt ist. Der dargestellte Pfeil 25 soll dabei den zeitlichen Verlauf näher darstellen. Im Bereich 26 wurde der Fahrer als fahrübernahmebereit festgestellt. Es ist daher keine Aktion erforderlich. Zum Zeitpunkt 27 ist der Fahrer jedoch nicht mehr fahrübernahmebereit. Das bedeutet, das gleich zum Zeitpunkt 27 ein Warnsignal ausgegeben wird, vorliegend eine Nachricht auf ein Kombinationsdisplay und eine akustische Textnachricht. Nach diesem Warnhinweis wird für eine erste Zeitspanne 27, beispielsweise 6 Sekunden, überprüft, ob der Fahrer wieder in einem fahrübernahmebereiten Zustand zurückkehrt, das bedeutet, es werden weiterhin die Zustandswerte 23 ermittelt und entsprechend ausgewertet. Ergibt das Vergleichsergebnis, dass der Fahrer innerhalb der Zeitspanne 27 wieder fahrübernahmebereit ist, wird der Aktionsplan abgebrochen und das vollautomatische Fahrerassistenzsystem 2 wird wie üblich weiterbetrieben.

In Fig. 4 wird jedoch der Fall dargestellt, dass der Fahrer nicht in den fahrübernahmebereiten Zustand zurückkehrt. Dann wird nach Ablauf der Zeitspanne 27, Zeitpunkt 28, eine Fahrerübernahmeaufforderung ausgegeben. Der Fahrer hat nun für eine zweite Zeitspanne 29 Zeit, selbsttätig die Fahrzeugführung zu übernehmen. Tut er dies nicht, wird zu einem Zeitpunkt 29 das Fahrerassistenzsystem 2 deaktiviert und die Warnblinkanlage des Kraftfahrzeugs 1 aktiviert. Zudem wird nochmals eine deutliche Warnung an den Fahrer ausgegeben, dass das Fahrerassistenzsystem 2 nun deaktiviert wurde und er selber die Fahrzeugführung wieder übernehmen muss.

## Patentansprüche

1. Verfahren zur Steuerung des Betriebs eines vollautomatischen, zur unabhängigen Fahrzeugführung ausgebildeten Fahrerassistenzsystems (2) eines Kraftfahrzeugs (1), bei welchem bei Eintritt wenigstens einer Übernahmebedingung eine Fahrerübernahmeaufforderung ausgegeben wird, welche bei Fahrübernahme durch den Fahrer, insbesondere durch Betätigung des Lenkrads (6) und/oder der Pedalerie (7), zum Deaktivieren des Fahrerassistenzsystems (2) führt, wobei
wenigstens ein den aktuellen auf die Fahrzeugführung bezogenen Zustand des Fahrers beschreibender Zustandswert (23) unter Berücksichtigung von Daten wenigstens eines Sensors (8, 9, 10, 11) automatisch ermittelt wird, wonach der Zustandswert (23) und/oder ein daraus abgeleiteter Wert mit einem jeweiligen Vergleichswert verglichen wird, wobei in Abhängigkeit des Vergleichsergebnisses bei einem nicht fahrübernahmebereiten Fahrer ein Warnhinweis und/oder eine Fahrerübernahmeaufforderung ausgegeben wird, wobei als Zustandswerte (23) ein die motorische Reaktionsfähigkeit des Fahrers durch dessen aktuelle Stellung beschreibender Reaktionsfähigkeitswert und ein die aufmerksame Verfolgung der Verkehrssituation durch den Fahrer angebender Situationswahrnehmungswert verwendet werden.

2. Verfahren nach Anspruch 1,
**dadurch gekennzeichnet,**
**dass** als Reaktionsfähigkeitswert ein die Zugänglichkeit des Lenkrads (6) beschreibender Wert und/oder ein die Stellung der Hände des Fahrers beschreibender Wert und/oder ein die Sitzeinstellung beschreibender Wert und/oder ein die Fußstellung des Fahrers beschreibender Wert verwendet wird.

3. Verfahren nach Anspruch 1 oder 2,
**dadurch gekennzeichnet,**
**dass** als Situationswahrnehmungswert ein die freie Sicht des Fahrers auf die Straße beschreibender Wert und/oder ein die Blickrichtung des Fahrers beschreibender Wert und/oder ein die Starrheit des Fahrerblickes beschreibender Wert und/oder ein die Müdigkeit und/oder einen Schlaf des Fahrers beschreibender Wert verwendet wird.

4. Verfahren nach einem der vorangehenden Ansprüche,
**dadurch gekennzeichnet,**
**dass** als wenigstens ein, insbesondere jeder, Zustandswert (23) ein Boolescher Wert oder eine Fuzzylogik-Variable verwendet wird.

5. Verfahren nach Anspruch 4,
**dadurch gekennzeichnet,**
**dass** ein mit dem Vergleichswert zu vergleichender Wert durch eine logische Verknüpfung von Zustandswerten (23) oder aufgrund eines Fuzzy-Klassifikators ermittelt wird.

6. Verfahren nach einem der vorangehenden Ansprüche,
**dadurch gekennzeichnet,**
**dass** der zeitliche Verlauf des Zustandswertes (23), insbesondere in Abhängigkeit von der aktuellen Geschwindigkeit des Kraftfahrzeugs (1), betrachtet wird.

7. Verfahren nach einem der vorangehenden Ansprüche,
**dadurch gekennzeichnet,**
**dass** als Sensor ein Lenkradbelegungssensor (9) und/oder ein Sitzeinstellungssensor (10) und/oder ein Fußraumsensor (11) zur Ermittlung der Fußstellung des Fahrers verwendet werden.

8. Verfahren nach einem der vorangehenden Ansprüche,
**dadurch gekennzeichnet,**
**dass** als Sensor eine Innenraumkamera (8) verwendet wird, deren Rohdaten (21) durch eine Bildverarbeitung (22) zur Ermittlung wenigstens eines Zustandswertes (23) aufbereitet werden.

9. Verfahren nach einem der vorangehenden Ansprüche,
**dadurch gekennzeichnet,**
**dass** zunächst ein Warnhinweis ausgegeben und weiter der Zustandswert (23) ermittelt und ein Vergleich durchgeführt wird, wobei, wenn sich nach einer ersten vorbestimmten Zeitspanne (27) kein einen fahrübernahmebereiten Fahrer anzeigendes Vergleichsergebnis ergibt, eine Fahrerübernahmeaufforderung erfolgt.

10. Verfahren nach Anspruch 9,
**dadurch gekennzeichnet,**
**dass**, wenn nach einer zweiten vorbestimmten Zeitspanne (29) keine Fahrübernahme des Fahrers erfolgt, das Fahrerassistenzsystem (2) deaktiviert und/oder eine Warnblinkanlage des Kraftfahrzeugs (1) aktiviert wird.

11. Verfahren nach einem der vorangehenden Ansprüche,
**dadurch gekennzeichnet,**
**dass** der Warnhinweis optisch und/oder akustisch und/oder haptisch ausgegeben wird.

12. Kraftfahrzeug (1), umfassend ein vollautomatisches, zur unabhängigen Fahrzeugführung ausgebildetes Fahrerassistenzsystem (2) mit einem zu dessen Betrieb ausgebildeten Steuergerät (3), ausgebildet zur Durchführung des Verfahrens nach einem der Ansprüche 1 bis 11, sowie wenigstens einen Sensor (8, 9, 10, 11).

## Claims

1. Method for controlling the operation of a fully automatic driver assistance system (2) of a vehicle (1) which is configured for independent vehicle guidance, in which, upon occurrence of at least one takeover condition, a driver takeover request is output, which results in the deactivation of the driver assistance system (2) when the driver takes over control in particular by operating the steering wheel (6) and/or the pedals (7), wherein
at least one status value (23) specifying the current status of the driver with regard to vehicle guidance is automatically determined by taking into account data from at least one sensor (8, 9, 10, 11), whereupon the status value (23) and/or a value derived therefrom is compared with a respective comparative value, a warning and/or a driver takeover request being output, depending on the comparison result, when the driver is not ready to take over control, a responsiveness value specifying the motor responsiveness of the driver by his current position and a situation awareness value indicating the attentive monitoring of the traffic situation by the driver being used as the status values (23).

2. Method according to claim 1,
**characterised in that** a value specifying the accessibility of the steering wheel (6) and/or a value specifying the position of the driver's hands and/or a value specifying the seat adjustment and/or a value specifying the position of the driver's feet is used as a responsiveness value.

3. Method according to either claim 1 or claim 2,
**characterised in that** a value specifying the driver's clear view of the road and/or a value specifying the driver's viewing direction and/or a value specifying the fixedness of the driver's view and/or a value specifying the driver's tiredness and/or the driver being asleep is used as a situation awareness value.

4. Method according to any of the preceding claims,
**characterised in that** a Boolean value or a fuzzy logic variable is used as at least one, in particular each, status value (23).

5. Method according to claim 4,
**characterised in that** a value which is to be compared with the comparative value is determined by means of a logic operation of status values (23) or on the basis of a fuzzy classifier.

6. Method according to any of the preceding claims,
**characterised in that** the chronological sequence of the status value (23) is considered in particular as a function of the current speed of the vehicle (1).

7. Method according to any of the preceding claims,
**characterised in that** a steering wheel occupancy sensor (9) and/or a seat adjustment sensor (10) and/or a footwell sensor (11) to determine the position of the driver's feet is used as a sensor.

8. Method according to any of the preceding claims,
**characterised in that** an interior camera (8) is used as a sensor, the raw data (21) from which camera are processed by image processing (22) in order to determine at least one status value (23).

9. Method according to any of the preceding claims,
**characterised in that**, initially, a warning is output and then the status value (23) is determined and a comparison is carried out, a driver takeover request being made, if, after a first predetermined time period (27), no comparison result showing the driver is ready to take over control arises.

10. Method according to claim 9,
**characterised in that** if, after a second predetermined time period (29), the driver has not taken over control, the driver assistance system (2) is deactivated and/or a hazard warning light of the vehicle (1) is activated.

11. Method according to any of the preceding claims,
**characterised in that** the warning is output optically and/or acoustically and/or haptically.

12. Motor vehicle (1), comprising a fully automatic driver assistance system (2) which is configured for independent vehicle guidance and has a control unit (3) configured for the operation thereof, configured to carry out the method according to any of claims 1 to 11, and comprising at least one sensor (8, 9, 10, 11).

## Revendications

1. Procédé de commande du fonctionnement d'un système d'assistance au conducteur (2) totalement automatique conformé pour assurer un guidage indépendant du véhicule dans un véhicule automobile (1), dans lequel, à la saisie au moins d'une condition de prise en charge, est délivrée une invitation de prise en charge du conducteur, qui mène, lors de la prise en charge de la conduite par le conducteur, en particulier par commande du volant de direction (6) et/ou des pédales (7), à la désactivation du système d'assistance au conducteur (2), dans lequel :
au moins une valeur d'état (23) décrivant l'état courant du conducteur en matière de guidage du véhicule est automatiquement déterminée en tenant compte de données au moins d'un capteur (8, 9, 10, 11), moyennant quoi la valeur d'état (23) et/ou une valeur qui en est tirée est ou sont comparées à une valeur de comparaison respective, dans lequel il est délivré à un conducteur qui n'est pas prêt à prendre en charge la conduite, en fonction du résultat de la comparaison, un avertissement et/ou une invitation de prise en charge du conducteur, dans lequel on utilise comme valeurs d'état (23) une valeur de réactivité décrivant la réactivité motrice du conducteur par sa position courante et une valeur de perception de la situation liée au suivi attentif de la situation de la circulation par le conducteur.

2. Procédé selon la revendication 1,
**caractérisé en ce que** :
l'on utilise comme valeur de réactivité une valeur décrivant l'accessibilité du volant de direction (6) et/ou une valeur décrivant la position des mains du conducteur et/ou une valeur décrivant le réglage du siège et/ou une valeur décrivant la position des pieds du conducteur.

3. Procédé selon la revendication 1 ou la revendication 2,
**caractérisé en ce que** :
l'on utilise comme valeur de perception de la situation une valeur décrivant la vue dégagée du conducteur sur la rue et/ou une valeur décrivant la direction de visée du conducteur et/ou une valeur décrivant la rigidité du regard du conducteur et/ou une valeur décrivant la fatigue et/ou un endormissement du conducteur.

4. Procédé selon l'une quelconque des revendications précédentes,
**caractérisé en ce que** :
l'on utilise comme au moins une valeur d'état, en particulier chaque valeur d'état (23), une valeur de Boole ou une variable de logique floue.

5. Procédé selon la revendication 4,
**caractérisé en ce que** :
l'on détermine une valeur à comparer à la valeur de comparaison par une combinaison logique de valeurs d'état (23) ou sur la base d'un classificateur de logique floue.

6. Procédé selon l'une quelconque des revendications précédentes,
**caractérisé en ce que** :
la variation dans le temps de la valeur d'état (23) est prise en compte, en particulier en fonction de la vitesse courante du véhicule automobile (1).

7. Procédé selon l'une quelconque des revendications précédentes,
**caractérisé en ce que** :
l'on utilise comme capteur un capteur d'occupation de volant de direction (9) et/ou un capteur de réglage de siège (10) et/ou un capteur d'espace des pieds (11) pour déterminer la position des pieds du conducteur.

8. Procédé selon l'une quelconque des revendications précédentes,
**caractérisé en ce que** :
l'on utilise comme capteur une caméra d'espace interne (8) dont les données brutes (21) sont aménagées par un traitement d'image (22) pour déterminer au moins une valeur d'état (23).

9. Procédé selon l'une quelconque des revendications précédentes,
**caractérisé en ce que** :
tout d'abord un avertissement est délivré et, ensuite, la valeur d'état (23) est déterminée et on effectue une comparaison, dans lequel, si, au bout d'un premier intervalle de temps prédéterminé (27), on n'obtient aucun résultat de comparaison affichant un conducteur prêt à prendre en charge la conduite, une invitation de prise en charge du conducteur est lancée.

10. Procédé selon la revendication 9,
**caractérisé en ce que** :
si, au bout d'un second intervalle de temps prédéterminé (29), il ne se produit pas de prise en charge de la conduite par le conducteur, le système d'assistance au conducteur (2) est désactivé et/ou un système d'avertissement clignotant du véhicule automobile (1) est activé.

11. Procédé selon l'une quelconque des revendications précédentes,
**caractérisé en ce que** :
l'avertissement est délivré en mode optique et/ou acoustique et/ou haptique.

12. Véhicule automobile (1), comprenant un système d'assistance au conducteur (2) totalement automatique conformé pour assurer un guidage indépendant du véhicule avec un appareil de commande (3) conçu pour son fonctionnement, aménagé pour réaliser le procédé selon l'une quelconque des revendications 1 à 11, ainsi qu'au moins un capteur (8, 9, 10, 11).
